# EUROPÄISCHE PATENTANMELDUNG

(11) **EP 2 613 129 A1**
(43) Veröffentlichungstag der Anmeldung: **10.07.2013**
(21) Anmeldenummer: 12189857.1
(22) Anmeldetag: 25.10.2012
(51) Int. Cl.: G01F 1/684, G01F 15/14

(54) **Vorrichtung zur Bestimmung eines Gasmassenstroms**

(30) Priorität: 05.01.2012 DE 102012100087
(71) Anmelder: Pierburg GmbH, 41460 Neuss (DE)
(72) Erfinder: Kühnel, Hans-Ulrich, 41239 Mönchengladbach (DE); Dellen, Franz, 47877 Willich (DE)
(74) Vertreter: Patentanwälte ter Smitten Eberlein Rütten Partnerschaftsgesellschaft

(57) **Zusammenfassung**

Es sind Vorrichtungen zur Bestimmung eines Luftmassenstroms mit einem Gehäuse (12), in dem ein Kanal (10) ausgebildet ist, durch den das Gas strömt und einem Massenstromsensor (28), der derart durch das Gehäuse (12) in den Kanal (10) ragt, dass ein Messabschnitt (34) des Massenstromsensors (28) im vom Gas durchströmten Kanal (10) angeordnet ist, bekannt.

Eine Eignung für einen Abgaskanal mit den dort auftretenden Pulsationen und drallbehafteten Strömungen ist nicht gegeben.

Um exakte Messergebnisse für einen Abgasstrom in einem Abgaskanal zu erhalten, wird daher vorgeschlagen, dass das den Kanal (10) bildende Gehäuse (12) und ein Gehäuse (37) des Massenstromsensors (28) derart ausgebildet sind, dass der Messabschnitt (34) des Massenstromsensors (28) im vom Gas durchströmten Kanal (10) zur Kanalachse (15) drehbar und schwenkbar ist und in einer beliebigen Position fixierbar ist.

## Beschreibung

Die Erfindung betrifft eine Vorrichtung zur Bestimmung eines Gasmassenstroms mit einem Gehäuse, in dem ein Kanal ausgebildet ist, durch den das Gas strömt und einem Massenstromsensor, der derart durch das Gehäuse in den Kanal ragt, dass ein Messabschnitt des Massenstromsensors im vom Gas durchströmten Kanal angeordnet ist.

Derartige Vorrichtungen sind vor allem aus dem Bereich der Ansaugluftmassenmessung in Verbrennungskraftmaschinen bekannt. Besonders gute Ergebnisse werden dabei mit Luftmassenmessern erzielt, welche nach dem Prinzip der Heißfilmanemometrie arbeiten. Dies bedeutet, dass Heizwiderstände des Sensors erhitzt werden, wobei durch Konvektion die erzeugte Wärme dieser Heizwiderstände auf das strömende Medium abgegeben wird. Die daraus resultierende Temperaturänderung des Heizwiderstandes oder die zusätzliche Leistungsaufnahme zum Erhalt der Heizwiderstandstemperatur sind ein Maß für den vorhandenen Massenstrom.

Derartige Sensoren werden in den letzten Jahren auch zur Messung des Abgasmassenstroms genutzt, wie beispielsweise aus der DE 10 2005 061 533 B4 bekannt ist. Neben dem Problem der auftretenden Verschmutzung bei der Verwendung im Abgasstrang besteht das Problem repräsentative Messergebnisse bei auftretenden Pulsationen und Turbulenzen zu erhalten, wie sie verstärkt im Abgasstrang auftreten.

Für die Verwendung in Luftansaugkanälen sind Vorrichtungen zur Beeinflussung der Strömung zur Verbesserung der Messergebnisse bekannt geworden, welche aus einem im Kanal vor dem Massenstromsensor angeordneten Strömungsgleichrichter bestehen. So wird in der DE 198 27 375 Al eine Vorrichtung beschrieben, bei der stromaufwärts des Sensors ein Strömungsgleichrichter mit durch Wänden voneinander getrennten Strömungsöffnungen und ein Drahtgitter angeordnet sind, welche über Fixierelemente im Kanal befestigt sind.

Eine ähnliche Vorrichtung zur Luftmassenmessung wird in der EP 0 458 998 A1 beschrieben. Hier ist hinter einem Wabenkörper, der dazu dient eine laminare Strömung zu erzeugen, ein Gitter zur Erzeugung von Mikrowirbetn angeordnet. Stromabwärts dieses Gitters befindet sich der Luftmassenmesser. Stromabwärts des Sensors ist ein Schutzgitter angeordnet, welches den Luftstrom nicht beeinflusst.

Diese bekannten Vorrichtungen zur Gasmassenstrombestimmung weisen das Problem auf, dass die Strömung nicht über den gesamten Querschnitt einheitlich ist, was dazu führt, dass der Sensor nicht an einem für den gesamten Querschnitt repräsentativen Punkt misst. Zusätzlich weist die Strömung einen Drall auf, der dazu führt, dass entweder der Sensor nicht parallel zu seiner Oberfläche überströmt wird oder bei Verwendung von Strömungsgleichrichtern die Einströmung in die Kanäle des Strömungsgleichrichters durch den Winkel des Eintrittsquerschnitts zum Gasstrom die in den jeweiligen Kanal einströmende und zu messende Abgasmasse verringert. Dies führt zu ungenauen Messergebnissen bei der Massenstrombestimmung.

Es stellt sich daher die Aufgabe, eine Vorrichtung zur Bestimmung eines Gasmassenstroms zu schaffen, mit welcher eine repräsentative Abgasmassenstrommessung durch optimale Anströmung des Sensors ermöglicht wird, so dass möglichst exakte Messergebnisse erzielt werden können, ohne den Strömungswiderstand deutlich zu erhöhen.

Diese Aufgabe wird durch eine Vorrichtung zur Bestimmung eines Gasmassenstroms mit den Merkmalen des Hauptanspruchs gelöst. Dadurch, dass das den Kanal bildende Gehäuse und ein Gehäuse des Massenstromsensors derart ausgebildet sind, dass der Messabschnitt des Massenstromsensors im vom Gas durchströmten Kanal zur Kanalachse drehbar und schwenkbar ist und in einer beliebigen Position fixierbar ist, kann zunächst für jeden Kanal eine optimale Position des Sensors im Kanal ermittelt werden und anschließend der Sensor in dieser bestimmten Position fixiert werden. Dabei wird sowohl der Winkel der Anströmung optimal eingestellt, indem ein glattes Überströmen der Messelemente des Sensors sichergestellt wird als auch die Position im Querschnitt des Kanals in Höhe eines repräsentativen Stromfadens. Entsprechend werden repräsentative Messergebnisse erzielt.

Vorzugsweise ist der Massenstromsensor sphärisch am Kanal bildenden Gehäuse gelagert. So kann auf besonders einfache Weise ein geführtes Schwenken und Drehen des Massenstromsensors verwirklicht werden.

Um eine besonders einfache Fixierung in der gewählten Schwenk- und Drehposition des Sensors zu erreichen, sind am Kanal bildenden Gehäuse Spannelemente ausgebildet, welche gegen einen Hohlkugelausschnitt des Gehäuses des Massenstromsensors anliegen.

Diese Fixierung kann ohne zusätzliche Bauteile dadurch erreicht werden, dass die Spannelemente federnd gegen den Hohlkugelausschnitt anliegen oder am Hohlkugelausschnitt Einbuchtungen ausgebildet sind, in die die Spannelemente greifen, so dass entweder ein Kraftschluss oder ein Formschluss zwischen den Enden der Spannelemente und dem Gehäuse des Massenstromsensors erzeugt wird.

In einer alternativen oder zusätzlichen Ausführung weist der Hohlkugelausschnitt des Gehäuses des Massenstromsensors eine Bohrung auf, durch die eine Schraube ragt, welche gegen oder in das Kanalgehäuse geschraubt ist. In diesem Fall können die Spannelemente zur Vorfixierung bei der Bestimmung der optimalen Position des Sensors im Kanal dienen und der Sensor daraufhin in der gefundenen Position über die Schraube endgültig befestigt werden, so dass diese Befestigung auch in einem schwingungsbelasteten Zustand über eine lange Lebensdauer sichergestellt ist.

Vorzugsweise ist der Messabschnitt im Kanal von einem Strömungsgleichrichter umgeben, der bis zur Fixierung mit dem Messabschnitt im Kanal drehbar und schwenkbar ist. Dieser Strömungsgleichrichter stellt sicher, dass das in die einzelnen Kanäle des Strömungsgleichrichters strömende Gas möglichst drallfrei zum Sensorelement gelangt, um dort eine optimale Anströmung der Messelemente sicherzustellen. Durch Drehen des Sensors in Hauptströmungsrichtung des Gases wird der Strömungsgleichrichter senkrecht angeströmt, so dass auch die Gesamtgasmasse durch den jeweiligen Kanal der Messung zur Verfügung gestellt wird.

In einer dazu weiterführenden Ausführung erstreckt sich der Strömungsgleichrichter vom stromaufwärtigen Bereich des Messabschnitts zum stromabwärtigen Bereich des Messabschnitts. Dadurch wird erreicht, dass direkt am Messabschnitt eine gerichtete Strömung vorliegt, die unabhängig von Pulsationen, also auftretenden Rückströmungen besteht. Wirbel im Nachlauf des Sensors, die zu einer Rückströmung hinter einem Strömungsgleichrichter führen, werden vermieden, beziehungsweise in einen stromabwärtigen Bereich verlegt, der keinen Einfluss auf die Messergebisse des Sensors hat. Zusätzlich werden die Messelemente bei der Montage allseitig geschützt, so dass auf ein gesondertes Schutzgitter verzichtet werden kann.

Vorzugsweise verlaufen die Strömung beeinflussende Aufteilungswände des Strömungsgleichrichters parallel zu einer Ebene, die durch zwei Messelemente auf dem Messabschnitt des Massenstromsensors aufgespannt ist. So entsteht eine Strömung, die parallel zur Erstreckung der Trägerplatte des Sensors ist, so dass eine senkrechte Anströmung, die zu Messfehlern führen kann vermieden wird. Bei Verwendung in partikelbehafteten Strömungen werden hierdurch zu starke Verschmutzungen vermieden.

Weiterhin ist es vorteilhaft, wenn der Strömungsgleichrichter eine Gitterstruktur aufweist. Diese eignet sich sehr gut zur Gleichrichtung der Strömung und ist einfach herstellbar.

Vorzugsweise weist der Strömungsgleichrichter einen sphärischen Außenumfang auf, wodurch sichergestellt wird, dass ein Schwenken und Drehen des Strömungsgleichrichters im Kanal nicht durch ein Anschlagen an die Kanalwände eingeschränkt wird.

Besonders vorteilhaft ist es, wenn der Strömungsgleichrichter an einem Gehäuse des Massenstromsensors befestigt oder einstückig mit dem Gehäuse ausgebildet ist, so dass er mit dem Massenstromsensor ausgerichtet und gedreht werden kann.

Es wird somit eine Vorrichtung zur Bestimmung eines Massenstromes geschaffen, mit welcher langzeitstabile korrekte Messwerte eines Gasmassenstroms erreicht werden, indem die Messelemente optimal zur im jeweiligen Kanal vorhandenen Strömung vor der endgültigen Befestigung des Massenstromsensors ausgerichtet werden. So wird ein drallfreies und waagerechtes Überströmen der Messelemente erreicht. Die Montage bleibt einfach. Der Druckverlust wird minimiert, so dass ein notwendiges Druckgefälle zur Förderung eines Gasstroms einfacher erreicht wird.

Ein Ausführungsbeispiel einer erfindungsgemäßen Vorrichtung zur Bestimmung eines Massenstroms ist in den Figuren dargestellt und wird nachfolgend am Beispiel einer Anwendung des Sensors in einem Abgaskanal einer Verbrennungskraftmaschine beschrieben.

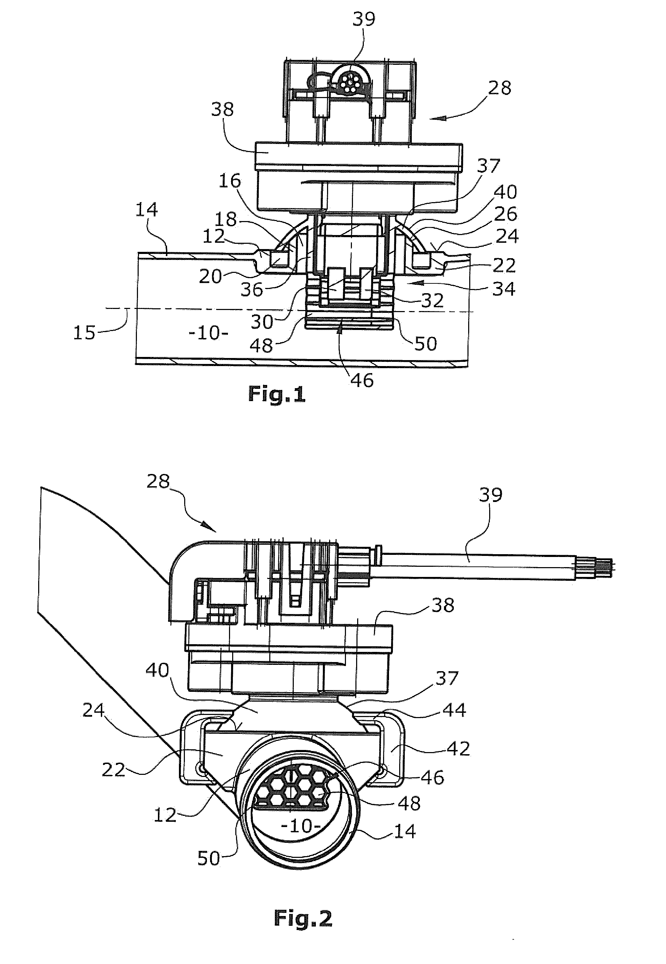

Figur 1 zeigt eine Seitenansicht einer erfindungsgemäßen Vorrichtung zur Bestimmung eines Massenstroms in geschnittener Darstellung.
Figur 2 zeigt eine Frontansicht der erfindungsgemäßen Vorrichtung zur Bestimmung eines Massenstroms als Draufsicht.

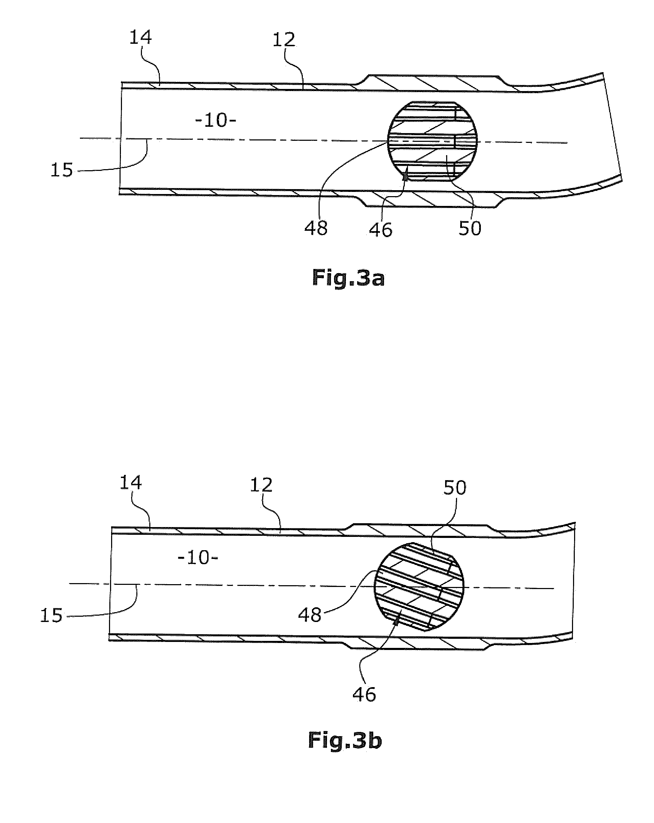

Die Figur 3 a) und b) zeigen eine Schnittansicht entlang der Kanalachse mit unterschiedlichen Stellungen des Massenstromsensors.

Die erfindungsgemäße Vorrichtung zur Bestimmung eines Massenstroms weist einen Abgas durchströmten Kanal 10 auf, der durch ein Gehäuse 12 gebildet wird, dessen Wände 14 den Kanal 10 radial begrenzen. In der Wand 14 ist eine senkrecht zu einer Kanalachse 15 verlaufende hohlzylindrische Öffnung 16 ausgebildet, die durch Hohlzylinderwand 18 begrenzt wird. Um die Hohlzylinderwand 18 ist eine ringförmige Ausnehmung 20 an einem Gehäuseteil 22 ausgebildet, welches sich von den Wänden 14 erstreckt. Das Gehäuseteil 22 bildet um die Hohlzylinderwand 18 eine senkrecht dazu verlaufende Fläche 24, in der die ringförmige Ausnehmung 20 ausgebildet ist. Das von der Kanalachse 15 weg weisende Ende 26 der Hohlzylinderwand 18 weist eine sphärische Form auf. Dies bedeutet, dass das Ende 26 der Hohlzylinderwand 18 einen ringförmigen Ausschnitt einer Kegeloberfläche bildet, deren Symmetrieachse die Mittelachse der Öffnung 16 ist.

In die Öffnung 16 ist ein Massenstromsensor 28 eingesteckt, der ein Gehäuses 37 aufweist und in bekannter Weise nach dem Prinzip der Heißfilmanemometrie arbeitet und entsprechend zwei nebeneinander angeordnete Messelemente 30, 32 in Form von Heizwiderständen aufweist. Die Messelemente 30, 32 sind an einem Messabschnitt 34 angeordnet, der in den Kanal 10 ragt. Der Messabschnitt 34 ragt aus einem zylindrischen Abschnitt 36 eines Gehäuses 37 des Abgasmassenstromsensors 28, an den sich am zu den Messelementen 30, 32 entgegengesetzten Ende ein Elektronikgehäuse 38 größeren Durchmessers anschließt, aus dem ein Anschlusskabel 39 zur Spannungsversorgung und Datenübertragung ragt. Der zylindrische Abschnitt 36 des Gehäuses 37 des Massenstromsensors 28 weist einen Durchmesser auf, der kleiner ist als der Durchmesser der Öffnung 16 beziehungsweise der Hohlzylinderwand 18, in der der zylindrische Abschnitt 36 angeordnet ist.

Vom zylindrischen Abschnitt 36 erstreckt sich zwischen dem Ende der Hohlzylinderwand 18 und dem Elektronikgehäuse 38 ein Hohlkugelausschnitt 40, dessen Wände sich bis an die ringförmige Ausnehmung 20 erstrecken. Dieser Hohlkugelausschnitt 40 weist den gleichen Innendurchmesser auf, wie die Kugeloberfläche des Endes 26 der Hohlzylinderwand 18. Entsprechend ist der Massenstromsensor 28 über den Hohlkugelausschnitt 40 sphärisch auf dem Ende 26 der Hohlzylinderwand 18 gelagert. Es wird deutlich, dass der Massenstromsensor 28 auf dem Ende 26 sowohl definiert gedreht werden kann als auch um den Mittelpunkt des Hohlkugelausschnitts 40 geschwenkt werden kann, wobei beim Schwenken das Ende des Hohlkugelausschnitts 40 in die Ausnehmung 20 gedreht wird. Gleichzeitig wird deutlich, warum der Durchmesser der Hohlzylinderwand 18 größer ist als der Durchmesser des zylindrischen Abschnitts 36 des Gehäuses 37, welches andernfalls nicht in der Öffnung 16 geschwenkt werden könnte. Entsprechend sind auch die Abstände zwischen dem zylindrischen Abschnitt 36 und der Hohlzylinderwand 18 zu dimensionieren.

Die Befestigung des Massenstromsensors 28 am Kanaigehäuse 12 erfolgt wiederum zwischen dem Hohlkugelausschnitt 40 und zwei Spannelementen 42, die am Gehäuseteil 22 befestigt oder einstückig mit diesem ausgebildet sind. Diese Spannelemente 42 weisen Federarme 44 auf, die sich in Richtung des Hohlkugelausschnitts 40 parallel zur Fläche 24 erstrecken und unter Federkraft von außen gegen diesen Hohlkugelausschnitt 40 anliegen, wodurch der Hohlkugelausschnitt 40 gegen das Ende 26 der Hohlzylinderwand gedrückt wird. Dabei wird die Federkraft dadurch erzeugt, dass die Federarme 44 geringfügig länger ausgebildet sind als der Abstand zur Oberfläche des Hohlkugelausschnitts 40 ist, so dass die Federarme 44 geringfügig verbogen sind.

Werden an der Oberfläche des Hohlkugelausschnitts 40 Einbuchtungen ausgebildet, die gleichmäßig über die Oberfläche verteilt sind, können die Federarme 44 zur Befestigung in diese Einbuchtungen greifen. Alternativ muss entweder eine ausreichende Federkraft zur Verfügung gestellt werden, die auch bei Vibrationsbelastung ausreicht oder es erfolgt eine weitere Fixierung mittels einer Schraube. Diese wird entweder durch eine nicht dargestellte Bohrung am Hohlkugelausschnitt 40 gesteckt und in das Gehäuse 12 geschraubt oder in den Hohlkugelausschnitt 40 geschraubt, so dass ein Klemmen über die Schraube am Gehäuse 12 erfolgt.

Das Gehäuse 37 weist des Weiteren einen Strömungsgleichrichter 46 auf, der eine wabenförmige Gitterstruktur mit Einzelkanälen 48 aufweist, die durch Aufteilungswände 50 begrenzt werden. Die Aufteilungswände 50 sind parallel zueinander und parallel zu einer kürzesten Verbindung zwischen den beiden Messelementen 30, 32 des Massenstromsensors 28 angeordnet. Dabei erstrecken sich die Aufteilungswände 50 von der stromaufwärtigen Seite der Messelemente 30, 32 bis zur stromabwärtigen Seite der Messelemente 30, 32.

Der Strömungsgleichrichter 46 erstreckt sich lediglich geringfügig über die Kanalachse 15 hinweg in den Kanal 10, so dass ein Schwenken des Sensors 28 nicht durch die Kanalwand 14 eingeschränkt wird. Um auch ein Drehen des Massenstromsensors 28 um 360° zu ermöglichen, weist der Außenumfang des Strömungsgleichrichters 46 eine zylindrische Form auf, welche im vorliegenden Ausführungsbeispiel an gegenüberliegenden Seiten abgeflacht ausgebildet ist. Diese abgeflachten Seiten werden durch die Aufteilungswände 50 gebildet.

Ein im Abgaskanal 10 vorhandener Abgasstrom weist üblicherweise drallbehaftete Strömungsfäden auf. Das bedeutet, dass der Abgasstrom sich beispielsweise spiralförmig durch den Abgaskanal bewegt, wobei es in einem Querschnitt Zonen höherer Dichte und Zonen geringerer Dichte gibt. Entsprechend existieren Strömungsfäden, welche einen repräsentativen Massenstrom aufweisen. Entsprechend kann durch die Schwenkbewegung im Kanal 10 sichergestellt werden, dass der Messabschnitt 34 in einen solchen Strömungsfaden gelegt wird. Durch die Drehung des Sensors 28 wird zusätzlich ein möglichst gerades Einströmen in die Gitterstruktur sichergestellt, so dass auch keine Verfälschungen des Messergebnisses durch einen am Eintrittsquerschnitt vorbeiströmenden Abgasteilstrom entsteht. So kann für einen vorgegebenen Abgasmassenstorm eine Kalibrierung stattfinden, bei der für den entsprechenden Kanal zunächst die optimale Lage des Sensors 28 im Kanal 10 ermittelt wird und der Sensor 28 daraufhin in dieser Position abschließend fixiert wird. Der in das Gitter gelangende Abgasstrom wird durch die Gitter entlang der Aufteilungswände 50 geleitet und auf diese Weise gerichtet, so dass eine laminare Strömung parallel zu den Aufteilungswänden 50 ohne Wirbel und Turbulenzen trotz auftretender Abgaspulsationen entsteht. Auch eine Wirbelbildung hinter dem Strömungsgleichrichter 46 und deren Rückströmung wird so zuverlässig vermieden, Dennoch bleibt der Strömungswiderstand im Vergleich zu bekannten Strömungsgleichrichtern 46 gering, da nur eine geringfügige Ablenkung des Abgasstroms erfolgt.

Durch die Parallelität der Verbindungslinie der Messelemente 30, 32 zu den Wänden 50 werden diese auch nicht angeströmt sondern lediglich überströmt, was Ablagerungen auf dem Trägerkörper deutlich reduziert.

Es sollte deutlich sein, dass der Schutzbereich des Hauptanspruchs nicht auf das beschriebene Ausführungsbeispiel beschränkt ist. Neben der dargestellten Wabenstruktur sind verschiedene Gitterstrukturen ausführbar. Auch können Massenstromsensoren für andere Anwendungen verwendet werden. Eine Messung kann je nach Verwendung auch ohne den Strömungsleitkörper gute Ergebnisse liefern, wenn die Ausrichtung korrekt durchgeführt wird. Auch eine andere Befestigung des Massenstromsensors am Kanalgehäuse wäre denkbar.

## Patentansprüche

1. Vorrichtung zur Bestimmung eines Gasmassenstroms mit einem Gehäuse (12), in dem ein Kanal (10) ausgebildet ist, durch den das Gas strömt,
einem Massenstromsensor (28), der derart durch das Gehäuse (12) in den Kanal (10) ragt, dass ein Messabschnitt (34) des Massenstromsensors (28) im vom Gas durchströmten Kanal (10) angeordnet ist,
**dadurch gekennzeichnet, dass**
das den Kanal (10) bildende Gehäuse (12) und ein Gehäuse (37) des Massenstromsensors (28) derart ausgebildet sind, dass der Messabschnitt (34) des Massenstromsensors (28) im vom Gas durchströmten Kanal (10) zur Kanalachse (15) drehbar und schwenkbar ist und in einer beliebigen Position fixierbar ist.

2. Vorrichtung zur Bestimmung eines Gasmassenstroms nach Anspruch 1,
**dadurch gekennzeichnet, dass**
der Massenstromsensor (28) sphärisch am Kanal (10) bildenden Gehäuse (12) gelagert ist.

3. Vorrichtung zur Bestimmung eines Gasmassenstroms nach Anspruch 2,
**dadurch gekennzeichnet, dass**
am Kanal (10) bildenden Gehäuse (12) Spannelemente (42) ausgebildet sind, welche gegen einen Hohlkugelausschnitt (40) des Gehäuses (37) des Massenstromsensors (28) anliegen.

4. Vorrichtung zur Bestimmung eines Gasmassenstroms nach Anspruch 3,
**dadurch gekennzeichnet, dass**
die Spannelemente (42) federnd gegen den Hohlkugelausschnitt (40) anliegen oder am Hohlkugelausschnitt (40) Einbuchtungen ausgebildet sind, in die die Spannelemente (42) greifen.

5. Vorrichtung zur Bestimmung eines Gasmassenstroms nach einem der Ansprüche 2 bis 4,
**dadurch gekennzeichnet, dass**
der Hohlkugelausschnitt (40) des Gehäuses (37) des Massenstromsensors (28) eine Bohrung aufweist, durch die eine Schraube ragt, welche gegen oder in das den Kanal (10) bildende Gehäuse (12) geschraubt ist.

6. Vorrichtung zur Bestimmung eines Gasmassenstroms nach einem der vorhergehenden Ansprüchen,
**dadurch gekennzeichnet, dass**
der Messabschnitt (34) im Kanal (10) von einem Strömungsgleichrichter (46) umgeben ist, der bis zur Fixierung mit dem Messabschnitt (34) im Kanal (10) drehbar und schwenkbar ist.

7. Vorrichtung zur Bestimmung eines Gasmassenstroms nach Anspruch 6,
**dadurch gekennzeichnet, dass**
der Strömungsgleichrichter (46) sich vom stromaufwärtigen Bereich des Messabschnitts (34) zum stromabwärtigen Bereich des Messabschnitts (34) erstreckt.

8. Vorrichtung zur Bestimmung eines Gasmassenstroms nach einem der Ansprüche 6 oder 7,
**dadurch gekennzeichnet, dass**
die Strömung beeinflussende Aufteilungswände (50) des Strömungsgleichrichters (46) parallel zu einer Ebene verlaufen, die durch zwei Messelemente (30, 32) auf dem Messabschnitt (34) des Massenstromsensors (28) aufgespannt ist.

9. Vorrichtung zur Bestimmung eines Gasmassenstroms nach einem der Ansprüche 6 bis 8,
**dadurch gekennzeichnet, dass**
der Strömungsgleichrichter (46) eine Gitterstruktur aufweist.

10. Vorrichtung zur Bestimmung eines Gasmassenstroms nach einem der Ansprüche 6 bis 9,
**dadurch gekennzeichnet, dass**
der Strömungsgleichrichter (46) einen sphärischen Außenumfang aufweist.

11. Vorrichtung zur Bestimmung eines Gasmassenstroms nach einem der Ansprüche 6 bis 10,
**dadurch gekennzeichnet, dass**
der Strömungsgleichrichter (46) am Gehäuse (37) des Massenstromsensors (28) befestigt oder einstückig mit dem Gehäuse (37) ausgebildet ist.
